# EUROPEAN PATENT APPLICATION

(11) **EP 4 403 658 A1**
(43) Date of publication of application: **24.07.2024**
(21) Application number: 22892447.8
(22) Date of filing: 04.10.2022
(51) Int. Cl.: C22B 23/02, B09B 3/70, B09B 5/00, C22B 5/02, C22B 5/04, C22B 7/00, C22B 47/00, H01M 10/54

(54) **VALUABLE ELEMENT RECOVERY MEHTOD**

(30) Priority: 12.11.2021 JP 2021184548; 24.03.2022 JP 2022048290
(71) Applicant: JFE Steel Corporation, Tokyo 100-0011 (JP)
(72) Inventor: HINO, Yuta, Tokyo 100-0011 (JP); INOUE, Yotaro, Tokyo 100-0011 (JP); TAKAHASHI, Katsunori, Tokyo 100-0011 (JP)
(74) Representative: Haseltine Lake Kempner LLP
(86) International application number: PCT/JP2022/037084
(87) International publication number: WO 2023/084947

(57) **Abstract**

Provided is a method for recovering a valuable element, by which method metal with a high proportion of a valuable element can be obtained. The method includes adding a reductant to an oxide containing at least one element selected from the group consisting of nickel and cobalt, followed by heating, to thereby reduce the oxide, the reductant contains at least one selected from the group consisting of metallic iron and an iron oxide, and an addition amount of the reductant is 1.3 equivalent or less.

## Description

### TECHNICAL FIELD

The present invention relates to a method for recovering a valuable element.

### BACKGROUND ART

In recent years, the demand for lithium ion batteries have been rapidly increasing due to the spread and expansion of smartphones, personal computers, and other devices, and the spread of electric vehicles.

In particular, the demand for electric vehicles with no use of fossil fuels is expected to further expand in the future from the current perspective of suppressing generation of carbon dioxide, and in association with this expectation, the demand for lithium ion batteries is also expected to further increase.

Generally, the positive electrode material of a lithium ion battery is made from an oxide (composite oxide) containing, for example, nickel (Ni) and cobalt (Co).

Metal elements such as Ni and Co are not abundantly available even on a global scale.

Therefore, it is very advantageous to recover those metal elements (valuable elements) from the positive electrode materials of lithium ion batteries, for the purpose of effective use of resources.

A lithium ion battery is composed of a combination of a positive electrode material, a negative electrode material, a separator, and other members, and besides contains, for example, an electrolytic solution.

Hence, in order to recover valuable elements from the positive electrode material of a lithium ion battery, a preliminary process including removal of an electrolytic solution, pulverization, and crushing is performed prior to the recovery.

The positive electrode material is separated from the lithium ion battery through this preliminary process, and valuable elements are thereafter recovered from the separated positive electrode material.

The processes of recovering valuable elements are classified into two types, i.e., wet process of dissolving the positive electrode material in acid, followed by solvent extraction and electrolytic refining or the like, and dry process of heating the positive electrode material together with a reductant to generate valuable elements by reduction.

Examples of the reductant used in the dry process (for example, Patent Literature 1) include a carbonaceous material such as graphite, an Al-containing substance such as metallic aluminum (Al), a Si-containing substance such as metallic silicon (Si) and FeSi.

### CITATION LIST

### PATENT LITERATURE

Patent Literature 1: JP 2021-95628 A

### SUMMARY OF INVENTION

### TECHNICAL PROBLEMS

In a case where an Al-containing substance or a Si-containing substance is used as the reductant in the dry process, slag is normally generated to thus require a slag treatment cost, and in addition, such a reductant itself is relatively expensive, thereby resulting in a high cost.

In a case where a carbonaceous material is used as the reductant, a large amount of carbon dioxide is generated as compared to a case where another reductant is used. This may go against the current trend of suppressing generation of carbon dioxide.

Hence, the inventors of the present invention have studied and found that metallic iron and iron oxides can be used as the reductant as described below. In this case, the cost is lower than the case where an Al-containing substance or a Si-containing substance is used, and generation of carbon dioxide can be suppressed because no carbonaceous material is used.

Meanwhile, the present inventors further studied and found that, depending on the amount of reductant used, the metal (alloy) obtained through reduction of the positive electrode material (oxide) sometimes has a high proportion of Fe and a low proportion of Ni and Co being valuable elements.

The present invention has been made in view of the foregoing and aims at providing a method for recovering a valuable element, by which method metal with a high proportion of a valuable element can be obtained.

### SOLUTION TO PROBLEMS

The present inventors found, through an earnest study, that employing the configuration described below enables the achievement of the above-mentioned object, and the invention has been completed.

Specifically, the present invention provides the following [1] to [6].
[1] A method for recovering a valuable element, the method comprising: adding a reductant to an oxide containing at least one element selected from the group consisting of nickel and cobalt, followed by heating, to thereby reduce the oxide, wherein the reductant contains at least one selected from the group consisting of metallic iron and an iron oxide, and an addition amount of the reductant is 1.3 equivalent or less.
[2] The method for recovering a valuable element according to [1], wherein the oxide is obtained from a lithium ion battery.
[3] The method for recovering a valuable element according to [1] or [2], wherein the iron oxide is ferrous oxide.
[4] The method for recovering a valuable element according to any one of [1] to [3], wherein the reductant is at least one selected from the group consisting of dust, scale, sludge, and scrap.
[5] The method for recovering a valuable element according to any one of [1] to [4], wherein temperature for heating the oxide is not lower than 1,450°C.
[6] The method for recovering a valuable element according to any one of [1] to [5], wherein the oxide is reduced to thereby obtain metal containing iron and at least one element selected from the group consisting of nickel and cobalt.

### ADVANTAGEOUS EFFECTS OF INVENTION

The present invention can provide a method for recovering a valuable element, by which method metal with a high proportion of a valuable element can be obtained.

### BRIEF DESCRIPTION OF DRAWINGS

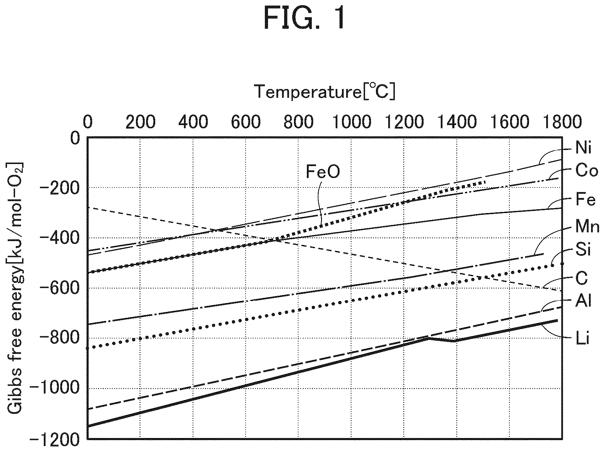

[FIG. 1] FIG. 1 is an Ellingham diagram (standard free energy change-temperature diagram).

### DESCRIPTION OF EMBODIMENTS

### [Method for Recovering Valuable Element]

The method for recovering a valuable element according to the invention (hereinafter, also referred to as "present recovery method") includes adding a reductant to an oxide that is obtained from a lithium ion battery and that contains at least one element selected from the group consisting of nickel and cobalt, followed by heating to reduce the oxide, and the reductant contains at least one selected from the group consisting of metallic iron and iron oxides and is added in an amount of 1.3 equivalent or less.

Generally, the present recovery method is to recover at least one element (hereinafter, also referred to as "valuable element") selected from the group consisting of nickel (Ni) and cobalt (Co) from a positive electrode material (oxide) of a lithium ion battery through the dry process.

### <Findings Obtained by Inventors>

A common positive electrode material of a lithium ion battery is made from an oxide (composite oxide) such as LiNiO₂, LiCoO₂, or LiMnO₂.

From the thermodynamic point of view, in the dry process, LiNiO₂ and LiCoO₂ are decomposed at high temperature as expressed below, generating NiO and CoO, respectively.

2LiNiO₂ -> Li₂O+2NiO+1/2O₂

2LiCoO₂ -> Li₂O+2CoO+1/2O₂

The respective standard free energy changes (ΔG^{o}) of NiO and CoO in the decomposition reaction are expressed below.

NiO -> Ni+1/2O₂: ΔG^{o}=234900-84.68T [J]

CoO -> Co+1/2O₂: ΔG^{o}=235480-71.55T [J]

A substance having a value of the free energy change lower than the values of these standard free energy changes at any high temperature can be used as the reductant.

Conventionally, substances having high reducing power such as a carbonaceous material, an Al-containing substance, and a Si-containing substance have been used as the reductant.

However, it is desired to use another reductant from the viewpoint of suppressing generation of carbonaceous dioxide and the cost.

Hence, the present inventors studied potential new reductant substances which are non-carbonaceous, relatively inexpensive, and abundantly present. As a result, it was found that metallic iron (Fe) and iron oxides are available.

The standard free energy change (ΔG^{o}) in the decomposition reaction of iron oxides are expressed as follows.

FeO -> Fe+1/2O₂: ΔG^{o}=264430-64.73T [J]

Fe₃O₄ -> 3FeO+1/2O₂: ΔG^{o}=302370-108.15T [J]

FIG. 1 is an Ellingham diagram (standard free energy change-temperature diagram).

Referring to the standard free energy changes described above and the Ellingham diagram (FIG. 1), the Fe/FeO equilibrium is negative as compared to the Ni/NiO equilibrium and the Co/CoO equilibrium, and it is thus expected that reduction by use of Fe may be possible.

In addition, the FeO/Fe₃O₄ equilibrium is negative as compared to the Ni/NiO equilibrium but positive as compared to the Co/CoO equilibrium.

Hence, Fe is also expected to selectively reduce Ni and Co (recovering Ni as metal, while Co remaining in slag). Specifically, the following reactions are expected.

NiO+Fe -> Ni+FeO: ΔG^{o}=-29530-19.95T [J]

CoO+Fe -> Co+FeO: ΔG^{o}=-28950-6.82T [J]

Metalization takes place more easily when the relevant line is situated at a higher position in the Ellingham diagram (FIG. 1).

When Si or Al is used as the reductant, Mn is also easily metalized.

By the use of Fe (or FeO) as the reductant, it can be expected that only Ni and Co are metalized while Mn is not metalized.

In the meantime, C, Al, Si, or other elements contained in the conventional reductants have very low standard free energy change values. The reduction reaction may hardly occurs (a very small scale of reduction reaction occurs) when Fe is used.

In view of the foregoing, the present inventors conducted tests to confirm the possibility for reducing NiO and CoO by the use of Fe and iron oxides (Test Examples 1 to 8) .

Specifically, first, powder of each of NiO, CoO, Fe, and FeO was mixed to have the powder composition (unit: molar ratio) shown in Table 1 below, and the obtained mixture was compacted.

The obtained green compact was then placed in an electric resistance furnace and was heated in an argon gas atmosphere at 140°C for 3 hours.

Phases formed in the compact having been heated were measured using an electron probe micro analyzer (EPMA) and evaluated. Table 1 below also shows the compositions of alloy phases among the formed phases.

### [Table 1]

**Table 1**

| | Powder Composition (molar ratio) | | | | Alloy Phase Composition [mol%] | | |
|---|---|---|---|---|---|---|---|
| | NiO | CoO | Fe | FeO | Ni | Co | Fe |
| Test Example 1 | 1 | 1 | 4 | - | 25.0 | 25.0 | 50.0 |
| Test Example 2 | 1 | 1 | 3 | - | 33.4 | 33.3 | 33.3 |
| Test Example 3 | 1 | 1 | 2.6 | - | 38.5 | 36.5 | 25.0 |
| Test Example 4 | 1 | 1 | 2 | - | 50.0 | 45.0 | 5.0 |
| Test Example 5 | 1 | 1 | - | 12 | 28.8 | 25.9 | 45.3 |
| Test Example 6 | 1 | 1 | - | 9 | 37.0 | 29.7 | 33.3 |
| Test Example 7 | 1 | 1 | - | 7.8 | 42.1 | 29.5 | 28.4 |
| Test Example 8 | 1 | 1 | - | 6 | 52.6 | 31.6 | 15.8 |

As shown in Table 1 above, in Test Examples 1 to 4 where Fe was added to NiO and CoO, NiO and CoO were reduced and melted together with an excessive portion of added Fe, and an alloy phase of Fe-Ni-Co was confirmed.

It was also confirmed that when a smaller amount of Fe was added, a proportion of Fe in the obtained alloy decreased while a proportion of Ni and Co increased.

In addition, also in Test Examples 5 to 8 where FeO was added to NiO and CoO, NiO and CoO were reduced, and an alloy phase of Fe-Ni-Co was confirmed. FeO was partially reduced to be converted to Fe, which was present as part of the alloy. At this time, the following reaction presumably took place.

4FeO -> Fe₃O₄+Fe

It was also confirmed that when a smaller amount of FeO was added, a proportion of Fe in the obtained alloy decreased while a proportion of Ni and Co increased.

In view of the foregoing result, it was confirmed that Fe and iron oxides can be used as the reductant.

In addition, it was confirmed that, by reducing an amount of the reductant to be added, an alloy having a higher proportion of Ni and Co can be obtained.

Next, the present recovery method is described below in more detail.

### <Reduction Target (Oxide)>

The reduction target in the present recovery method is an oxide containing at least one element selected from the group consisting of nickel and cobalt, and a specific example thereof is, for example, a positive electrode material of a lithium ion battery.

A lithium ion battery is subjected to a preliminary process including removal of an electrolytic solution, and a positive electrode material (oxide) is thus obtained.

### <Reductant>

Because of the above-described reason, a reductant containing at least one selected from the group consisting of metallic iron (Fe) and iron oxides is used in the present recovery method.

For the metallic iron (Fe), use may be made of, for example, scraps and granular iron used at an iron mill or the like.

In general, iron oxides are classified into three kinds, i.e., ferrous oxide (FeO) which may also be called Wustite, triiron tetraoxide (Fe₃O₄) which may also be called magnetite, and ferric oxide (Fe₂O₃) which may also be called hematite.

Among these, magnetite and hematite have the higher standard free energy changes than that of Wustite at the same temperature and sometimes have difficulty in causing reduction reaction.

Therefore, among iron oxides, ferrous oxide (Wustite) is preferred because it easily causes reduction reaction.

The iron oxide may be at least one of dust, scale, and sludge (hereinafter, conveniently referred to as "dusts") that are secondarily produced in an iron making process.

Use of dusts as the iron oxide is preferred in view of effective utilization of by-products from an iron making process and utilization of an inexpensive iron source.

### <Addition Amount of Reductant>

An addition amount of reductant in the present recovery method is 1.3 equivalent or less. With this amount, it is possible to obtain metal having a low proportion of Fe and a high proportion of valuable elements (Ni, Co).

When an addition amount of reductant is smaller, metal having a higher proportion of valuable elements (lower proportion of Fe) can be obtained. Accordingly, it is possible to avoid a situation where excessive Fe is not used as the reductant and remains in the metal.

In addition, when an addition amount of reductant is smaller, metal having a higher proportion of particularly Ni, among Ni and Co, can be obtained. This is presumably because, as Ni is shown at a position higher than Co in the Ellingham diagram (FIG. 1), Ni is more easily metalized than Co is and is reduced by Fe (or iron oxide) earlier than Co is.

Because of the above-described reasons, an addition amount of reductant is preferably 1.2 equivalent or less, more preferably 1.1 equivalent or less, yet more preferably 1.0 equivalent or less, particularly preferably less than 1.0 equivalent, and most preferably 0.9 equivalent or less.

The lower limit of an addition amount of reductant is not particularly limited.

From the viewpoint of suppressing reduction failure, an addition amount of reductant is preferably 0.1 equivalent or more, more preferably 0.3 equivalent or more, and yet more preferably 0.5 equivalent or more.

An amount of reductant required to reduce the reduction target oxide, i.e., NiO and CoO is regarded as 1.0 equivalent.

For instance, in a case where metallic iron (Fe) or ferrous oxide (FeO) is used as the reductant, reduction by use of each reductant of 1 equivalent is expressed as follows.

Fe+(NiO, CoO) -> (Ni, Co)+FeO

3FeO+(NiO, CoO) -> (Ni, Co)+Fe₃O₄

For determining an addition amount of reductant, first, the NiO and CoO contents in an oxide, i.e., the reduction target.

Specifically, the Ni and Co contents in the reduction target (oxide) are measured and are treated as the NiO and CoO contents in the reduction target (oxide).

The Ni and Co contents are measured using an energy dispersive X-ray spectrometer (EDX).

### <Heating>

In the present recovery method, heating is performed with the reductant having been added to an oxide, i.e., the reduction target. Consequently, the oxide is reduced.

In the process of heating, in addition to the reductant, CaO, SiO₂ or another flux may be added.

The temperature for heating the oxide (heating temperature) is not lower than 1,300°C, more preferably not lower than 1,350°C, yet more preferably not lower than 1,400°C, and particularly preferably not lower than 1,450°C, because reduction failure is easily suppressed.

The upper limit of the heating temperature is not particularly limited and is appropriately set depending on, for example, the performance of heating equipment (furnace), while a too high heating temperature may cause an excessive cost. Therefore, the heating temperature is preferably not higher than 1,800°C, and more preferably not higher than 1,700°C.

Preferred examples of the atmosphere when the oxide is heated (heating atmosphere) include: an inert atmosphere such as nitrogen gas (N₂) atmosphere, and argon gas (Ar) atmosphere; and a reducing atmosphere such as carbon monoxide gas (CO) atmosphere.

The time for heating the oxide (heating time) is preferably not less than 1 hour, more preferably not less than 2 hours, and yet more preferably not less than 3 hours, because reduction failure is easily suppressed.

The upper limit of the heating time is not particularly limited. Meanwhile, a too long heating time may cause an excessive cost. Therefore, the heating time is preferably not more than 6 hours, and more preferably not more than 5 hours.

The equipment used for heating the oxide is not particularly limited, and examples thereof include an electric furnace, a resistance furnace, a high frequency induction melting furnace, a low frequency induction melting furnace, a rotary kiln, a vertical furnace, a steelmaking furnace, and other conventionally known equipment.

### <Formed Product>

As a result of reducing an oxide (positive electrode material), i.e., the reduction target, metal is formed. In other words, valuable elements (Ni, Co) contained in the oxide are recovered as metal.

In the present recovery method, metal (also referred to as "formed metal") obtained by reduction of the oxide contains, for example, iron (Fe) and valuable elements (Ni, Co). Such metal has a sufficient value as a material and can be used in, for example, the iron making process.

The formed metal preferably has a low proportion of Fe and a high proportion of valuable elements (Ni, Co). With this constitution, the formed metal is more valuable as an alloy.

The formed metal may be metal containing only one kind of valuable element among valuable elements (Ni, Co) (or, may have a higher proportion of one kind of valuable element than that of the other valuable element).

As a result of reducing the oxide (positive electrode material), aside from metal, slag may be formed in some cases. Slag (also referred to as "formed slag") contains, for example, an oxide such as FeO.

The formed slag can also contain an oxide of a valuable element (such as MnO) that is not included in the formed metal.

In a case where an oxide containing Mn is reduced, since the Mn/MnO equilibrium is negative as compared to the Fe/FeO equilibrium and the FeO/Fe₃O₄ equilibrium, inclusion of Mn into the formed metal obtained by the reduction can be suppressed.

When the wet process is performed, depending on the form of Mn, its treatment method largely varies, thereby being troublesome. In the present recovery method adopting the dry process, on the other hand, Mn can be retained in slag, advantageously.

### [EXAMPLES]

The invention is specifically described below with reference to Examples. However, the invention is not limited to the examples described below.

### <Positive Electrode Material>

First, a positive electrode material of a lithium ion battery was prepared.

Specifically, the lithium ion battery was subjected to the preliminary process including disassembly, discharge, and removal of an electrolytic solution, and the positive electrode material was separated. The composition of the positive electrode material is shown in Table 2 below. As is seen from Table 2 below, the positive electrode material had a composition of Ni:Mn:Co=6:2:2 in molar ratio.

### [Table 2]

**Table 2**

| | Composition [mol%] | | |
|---|---|---|---|
| | Ni | Co | Mn |
| Positive electrode material | 60 | 20 | 20 |

### <Reductant>

For the reductant, graphite (C) powder, metallic aluminum (Al) powder, and metallic silicon (Si) powder were prepared.

As other reductants, metallic iron (Fe) powder obtained through the atomization process, and ferrous oxide (FeO) powder were prepared.

As yet other reductants, dust powder, scale powder, and scrap powder that were generated in the iron making process were prepared.

The respective compositions of those dust, scale, and scrap are shown in Table 3 below. "M.Fe" in Table 3 below refers to an amount of metallic Fe.

### [Table 3]

**Table 3**

| | Composition [mass%] | | | | | |
|---|---|---|---|---|---|---|
| | M.Fe | FeO | SiO₂ | Al₂O₃ | CaO | Others |
| Dust | 0.26 | 63.73 | 6.47 | 3.2 | 13.2 | 13.14 |
| Scale | 13.2 | 71.8 | 0.92 | 0.8 | 0.57 | 12.61 |
| Scrap | 100 | - | - | - | - | - |

### <Reduction of Positive Electrode Material: Inventive Examples 1 to 23, Comparative Examples 1 to 10, and Reference Examples 1 to 6>

Next, in an electric furnace with a heat size scale of 50 to 80 Kg, the prepared positive electrode material was placed, to which any one of the foregoing reductants, and flux (CaO, SiO₂) were additionally added, and the resultant was heated. The positive electrode material was thus reduced. The heating time was three hours in every example.

The type of reductant used, the addition amount (unit: equivalent) of reductant, the heating temperature (unit: °C), and the heating atmosphere (Ar, N₂, or CO) are shown in Table 4 below.

The composition of the metal that was formed through reduction of the positive electrode material was determined.

In addition, the reduction ratios (unit: mass%) of the respective metal elements, i.e., Ni, Co, and Mn were determined. The reduction ratio is a ratio of metal amount actually obtained with respect to the theoretical amount of metal formed through reduction reaction. For instance, the reduction ratio of 20 mol% of Co indicates that 20 mol% of Co contained in the positive electrode material was reduced and converted into metal, and the rest remained as an oxide.

The results are shown in Tables 4 to 6 below.

### [Table 4]

**Table 4**

| | Reductant | | Heating temperature [°C] | Heating atmosphere | Composition of formed product (metal) [mol%] | | | | Reduction ratio [mol%] | | |
|---|---|---|---|---|---|---|---|---|---|---|---|
| | Type | Addition Amount [equivalent] | | | | | | | | | |
| | | | | | Ni | Co | Fe | Mn | Ni | Co | Mn |
| IE 1 | Scrap | 0.8 | 1500 | Ar | 92.8 | 6.3 | 0.9 | <1 | 99 | 20 | <1 |
| IE 2 | Scrap | 1.1 | 1500 | Ar | 67.5 | 21.6 | 10.9 | <1 | 99 | 95 | <1 |
| IE 3 | Scrap | 1.3 | 1500 | Ar | 57.7 | 19.2 | 23.1 | <1 | 100 | 100 | <1 |
| IE 4 | Fe | 0.8 | 1500 | Ar | 92.8 | 6.3 | 0.9 | <1 | 99 | 20 | <1 |
| IE 5 | Fe | 1.1 | 1500 | Ar | 67.5 | 20.5 | 12.0 | <1 | 99 | 90 | <1 |
| IE 6 | Fe | 1.3 | 1500 | Ar | 57.7 | 19.2 | 23.1 | <1 | 100 | 100 | <1 |
| IE 7 | FeO | 0.7 | 1500 | Ar | 98.9 | 0.0 | 1.1 | <1 | 92 | 0 | <1 |
| IE 8 | FeO | 1.1 | 1500 | Ar | 70.7 | 8.5 | 20.8 | <1 | 97 | 35 | <1 |
| IE 9 | FeO | 1.3 | 1500 | Ar | 61.0 | 15.6 | 23.5 | <1 | 98 | 75 | <1 |
| IE 10 | Dust | 0.7 | 1500 | Ar | 97.3 | 0.0 | 2.7 | <1 | 90 | 0 | <1 |
| IE 11 | Dust | 1.1 | 1500 | Ar | 70.3 | 7.3 | 22.3 | <1 | 96 | 30 | <1 |
| IE 12 | Dust | 1.3 | 1500 | Ar | 61.1 | 11.5 | 27.4 | <1 | 97 | 55 | <1 |
| IE 13 | Scale | 0.7 | 1500 | Ar | 98.1 | 0.0 | 1.9 | <1 | 91 | 0 | <1 |
| IE 14 | Scale | 1.1 | 1500 | Ar | 69.5 | 15.5 | 15.0 | <1 | 97 | 65 | <1 |
| IE 15 | Scale | 1.3 | 1500 | Ar | 60.1 | 17.6 | 22.3 | <1 | 97 | 85 | <1 |
| IE 16 | Scrap | 1.1 | 1450 | N₂ | 64.8 | 20.5 | 14.8 | <1 | 95 | 90 | <1 |
| IE 17 | Scrap | 1.3 | 1450 | N₂ | 56.0 | 17.3 | 26.7 | <1 | 97 | 90 | <1 |
| IE 18 | Fe | 1.1 | 1400 | N₂ | 62.7 | 18.2 | 19.1 | <1 | 92 | 80 | <1 |
| IE 19 | Fe | 1.3 | 1400 | N₂ | 54.2 | 16.3 | 29.4 | <1 | 94 | 85 | <1 |
| IE 20 | FeO | 1.1 | 1400 | CO | 66.7 | 7.4 | 25.9 | <1 | 90 | 30 | <1 |
| IE 21 | FeO | 1.3 | 1400 | CO | 58.1 | 13.7 | 28.2 | <1 | 92 | 65 | <1 |
| IE 22 | Dust | 1.1 | 1350 | CO | 66.3 | 6.2 | 27.5 | <1 | 89 | 25 | <1 |
| IE 23 | Dust | 1.3 | 1350 | CO | 57.8 | 11.7 | 30.5 | <1 | 91 | 55 | <1 |

| | | | | | | | | | | | |
|---|---|---|---|---|---|---|---|---|---|---|---|
| IE: Inventive Example | | | | | | | | | | | |

### [Table 5]

**Table 5**

| | Reductant | | Heating temperature [°C] | Heating atmosphere | Composition of formed product (metal) [mol%] | | | | Reduction ratio [mol%] | | |
|---|---|---|---|---|---|---|---|---|---|---|---|
| | Type | Addition amount [equivalent] | | | | | | | | | |
| | | | | | Ni | Co | Fe | Mn | Ni | Co | Mn |
| CE 1 | Scrap | 1.5 | 1500 | Ar | 50.0 | 16.7 | 33.3 | <1 | 100 | 100 | <1 |
| CE 2 | Fe | 1.5 | 1500 | Ar | 50.0 | 16.7 | 33.3 | <1 | 100 | 100 | <1 |
| CE 3 | Fe | 2.0 | 1500 | Ar | 37.5 | 12.5 | 50.0 | <1 | 100 | 100 | <1 |
| CE 4 | FeO | 1.6 | 1500 | Ar | 51.9 | 15.6 | 32.5 | <1 | 100 | 90 | <1 |
| CE 5 | Dust | 1.6 | 1500 | Ar | 50.7 | 14.8 | 34.5 | <1 | 97 | 85 | <1 |
| CE 6 | Scale | 1.6 | 1500 | Ar | 50.9 | 16.5 | 32.6 | <1 | 98 | 95 | <1 |
| CE 7 | Scrap | 1.5 | 1450 | N₂ | 48.5 | 15.8 | 35.7 | <1 | 97 | 95 | <1 |
| CE 8 | Fe | 1.5 | 1400 | N₂ | 48.0 | 14.2 | 37.8 | <1 | 96 | 85 | <1 |
| CE 9 | FeO | 1.6 | 1400 | CO | 49.4 | 14.0 | 36.5 | <1 | 94 | 80 | <1 |
| CE 10 | Dust | 1.6 | 1350 | CO | 49.1 | 13.2 | 37.7 | <1 | 93 | 75 | <1 |

| | | | | | | | | | | | |
|---|---|---|---|---|---|---|---|---|---|---|---|
| CE: Comparative Example | | | | | | | | | | | |

### [Table 6]

**Table 6**

| | Reductant | | Heating temperature [°C] | Heating atmosphere | Composition of formed product (metal) [mol%] | | | | | | Reduction ratio [mol%] | | |
|---|---|---|---|---|---|---|---|---|---|---|---|---|---|
| | Type | Addition amount [equivalent] | | | | | | | | | | | |
| | | | | | Ni | Co | Mn | C | Al | Si | Ni | Co | Mn |
| RE 1 | C | 0.8 | 1500 | Ar | 62.5 | 18.8 | 18.8 | 0.0 | - | - | 83 | 75 | 75 |
| RE 2 | C | 1.3 | 1500 | Ar | 44.6 | 13.8 | 13.8 | 27.7 | - | - | 97 | 90 | 90 |
| RE 3 | Al | 0.8 | 1500 | Ar | 65.0 | 20.0 | 15.0 | - | 0.0 | - | 87 | 80 | 60 |
| RE 4 | Al | 1.3 | 1500 | Ar | 45.4 | 14.6 | 14.6 | - | 25.4 | - | 98 | 95 | 95 |
| RE 5 | Si | 0.8 | 1500 | Ar | 66.3 | 21.3 | 12.5 | - | - | 0.0 | 88 | 85 | 50 |
| RE 6 | Si | 1.3 | 1500 | Ar | 44.6 | 14.6 | 14.6 | - | - | 26.2 | 97 | 95 | 95 |

| | | | | | | | | | | | | | |
|---|---|---|---|---|---|---|---|---|---|---|---|---|---|
| RE: Reference Example | | | | | | | | | | | | | |

### <Summary of Evaluation Results>

As shown in Tables 4 to 5 above, in each of Inventive Examples 1 to 23 where the addition amount of reductant was 1.3 equivalent or less, the formed metal had a low proportion of Fe and a high proportion of Ni and Co in total as compared to Comparative Examples 1 to 10 where the addition amount of the reductant was not 1.3 equivalent or less.

In this regard, reference should be made to Inventive Examples 1 to 3, for instance.

As the addition amount of reductant was smaller, the formed metal tended to have a lower proportion of Fe and a higher proportion of Ni and Co in total.

In addition, as the addition amount of reductant was smaller, the formed metal tended to have a higher proportion of Ni (lower proportion of Co).

The same was true also in Inventive Examples 4 to 6, 7 to 9, 10 to 12, 13 to 15, 16 to 17, 18 to 19, 20 to 21, and 22 to 23.

## Claims

1. A method for recovering a valuable element, the method comprising: adding a reductant to an oxide containing at least one element selected from the group consisting of nickel and cobalt, followed by heating, to thereby reduce the oxide,
wherein the reductant contains at least one selected from the group consisting of metallic iron and an iron oxide, and
an addition amount of the reductant is 1.3 equivalent or less.

2. The method for recovering a valuable element according to claim 1, wherein the oxide is obtained from a lithium ion battery.

3. The method for recovering a valuable element according to claim 1 or 2, wherein the iron oxide is ferrous oxide.

4. The method for recovering a valuable element according to any one of claims 1 to 3, wherein the reductant is at least one selected from the group consisting of dust, scale, sludge, and scrap.

5. The method for recovering a valuable element according to any one of claims 1 to 4, wherein temperature for heating the oxide is not lower than 1,450°C.

6. The method for recovering a valuable element according to any one of claims 1 to 5, wherein the oxide is reduced to thereby obtain metal containing iron and at least one element selected from the group consisting of nickel and cobalt.
